Europäisches Patentamt

European Patent Office

Office européen des brevets

(19)

(11) Publication number : **0 470 823 A2**

# (12) EUROPEAN PATENT APPLICATION

(21) Application number : **91307247.6**

(22) Date of filing : **07.08.91**

(51) Int. Cl.⁵ : **B29D 23/18,** B29C 45/00,
C08L 23/28, F16D 3/84,
// B29K77:00, B29K96:02,
B29K105:12, B29K19:00

(30) Priority : **07.08.90 JP 209966/90**

(43) Date of publication of application :
**12.02.92 Bulletin 92/07**

(84) Designated Contracting States :
**DE FR GB**

(71) Applicant : **HONDA GIKEN KOGYO
KABUSHIKI KAISHA
1-1, Minamiaoyama 2-chome
Minato-ku Tokyo (JP)**
Applicant : **UBE INDUSTRIES LIMITED
12-32, 1-chome, Nishihoncho
Ube-shi, Yamaguchi-ken (JP)**
Applicant : **OHTSUKA POLY-TECH CO. LTD
4962, Ooaza haneo Namekawa-cho
Hiki-gun, Saitama-ken (JP)**

(72) Inventor : **Akema, Teruo c/o Kabushiki Kaisha
Honda Gijutsu
Kenkyusho 4-1 Chuo 1-chome, Wako-shi
Saitama-ken (JP)**

Inventor : **Suenaga, Toshihiko c/o Kabushiki
Kaisha Honda
Gijutsu Kenkyusho 4-1 Chuo 1-chome,
Wako-shi Saitama-ken (JP)**
Inventor : **Oda, Kunio
94-3, Rokodai 4-chome
Matsudo-shi Chiba-ken (JP)**
Inventor : **Oda, Denichi
464-17, Shimono
Ichihara-shi Chiba-ken (JP)**
Inventor : **Iwanami, Yoshio
1-21, Nishiwake-cho
Oume-shi Tokyo (JP)**
Inventor : **Sakuma, Hiroshi
4962, Ooza Haneo, Namekawamachi
Hiki-gun Saitama-ken (JP)**
Inventor : **Asano, Takehiko
4646, Miyukihoncho, Utsunomiya-shi
Tochigi-ken (JP)**

(74) Representative : **Overbury, Richard Douglas
HASELTINE LAKE & CO Hazlitt House 28
Southampton Buildings Chancery Lane
London WC2A 1AT (GB)**

(54) **Boot for a universal joint.**

(57) A boot for a universal joint having a tubular bellows portions and a cylindrical retaining portion provided at each axial end of the bellows portion is desired to have a high flexibility to bending deformation and a high rigidity and strength against circumferential deformation. Such desirable properties can be obtained by mixing and kneading a mixture essentially consisting of vulcanizable rubber such as chlorinated polyethylene, polyamide resin such as nylon distributed in the vulcanizable rubber as short fibers which are graft bonded to the vulcanizable rubber on surfaces of the fibers by means of a reactive bonding agent, a crosslinking or vulcanizing agent, and filler and other additive materials ; and injection molding the mixture by injecting the mixture into a metallic die set having a cavity corresponding to the shape of the boot from a central part of an axial end portion of the die set.

EP 0 470 823 A2

Fig.1

## TECHNICAL FIELD

The present invention relates to a boot for a universal joint and a method and composition for fabricating the same, and in particular to a boot for a universal joint which is suitable for covering a universal joint used in conjunction with a drive shaft of a motor vehicle and a method and composition for fabricating the same.

## BACKGROUND OF THE INVENTION

In recent years, it has been proposed to use elastomers such as synthetic rubber containing short fibers, for instance, of polyamide resin for the boots covering the universal joints of drive shafts for transmitting rotative power in motor vehicles. For instance, in Japanese patent laid open publication No. 61-10170 is disclosed a boot for a constant velocity joint using rubber material containing 2 to 10 weight % of short fibers. Japanese patent laid open publication 63-297872 discloses a boot for a joint using rubber material containing short fibers having an aspect ratio L/D (where L is the length of the fibers, and D is the diameter of the fibers) ranging from 200 to 500.

In such a boot, the amount of short fibers should be increased for the purpose of controlling the fatigue of the boot under long-term stress condition and the swelling of the boot because of the presence of lubricating grease, but, in the above mentioned conventional boots, since the short fibers made of organic material are simply attached to the matrix material consisting of rubber material by a bonding agent, the force of bonding between the short fibers and the rubber material is relatively weak. Increasing the amount of the short fibers, however, tends to cause peeling of the short fibers from the rubber material, and, therefore, there is a limit in the amount of short fibers which may be safely used.

Further, the short fibers contained in the above mentioned boots are simply added to the rubber material in advance, and are therefore dispersed in the rubber material without any controlled orientation due to lack of interaction between the rubber material and the short fibers. However, in the boot for a joint which is subjected to circumferential stress when rotated, a high rigidity against circumferential stress and a high compliance to bending deformation are both desired, but such desirable properties are not compatible with those of the rubber material.

It was proposed to obtain a fiber reinforced elastomer containing fine and short polyamide short fibers by mixing together vulcanizable rubber material such as chlorinated polyethylene, polyamide resin which can be formed into fibers, and one or more kinds of reactive bonding agents which can form graft bonding between the rubber material and the polyamide resin, at a temperature higher than the melting point of polyamide resin, and extending and cooling the mixture. The short fibers contained in this mixture are highly stretchable, and would not impair the capability of the overall material to elastically stretch. Further, during the process of stretching this elastomer material, short fibers are generated, and, since the surfaces of the short fibers are graft bonded to the rubber material by the reactive bonding agent, a large number of short fibers are oriented in a certain direction. The attention of the inventors was drawn to this fact.

## BRIEF SUMMARY OF THE INVENTION

In view of such problems of the prior art, a primary object of the present invention is to provide a boot for a universal joint which can be efficiently fabricated, and can ensure a sufficient overall fatigue resistance and retain its circumferential rigidity over an extended service life without involving any deterioration of its elastomer material even when it is used in a stressed condition, and a method for fabricating the same.

These and other objects of the present invention can be accomplished by providing a boot for a universal joint comprising a substantially tubular bellows portion and a cylindrical retaining portion provided at each axial end of the bellows portion, the bellows portion being made of a material comprising vulcanized rubber, and short fibers made of polyamide resin distributed in the vulcanized rubber, the short fibers being graft bonded to the vulcanized rubber and substantially oriented along a circumferential direction of the bellows portion. Such a boot can be conveniently fabricated by mixing and kneading a mixture comprising vulcanizable rubber, and polyamide resin distributed in the vulcanizable rubber as short fibers which are graft bonded to the vulcanizable rubber; and injection molding the mixture by injecting the mixture into a metallic die set having a cavity corresponding to the shape of the boot from a substantially central part of an axial end portion, preferably a smaller-diameter end portion of the die set, and vulcanizing the mixture in the metallic die set.

Since the short fibers consisting of polyamide resin are oriented along the circumferential direction of the bellows portion of the boot, it is possible to achieve a high rigidity and strength against a circumferential force applied thereto as a result of the rotation of the joint. Further, since the short fibers can be easily oriented during the process of injection molding, the fabrication process is not in any way complicated.

Preferably, the diameter of the fibers is approximately less than 5 μm and the length of the fibers is approximately larger than 50 μm, with the ratio of graft bonding being greater than 10% by weight.

Preferably, the vulcanized rubber essentially consists of chlorinated polyethylene (CPE), but may also be other equivalent materials such as chlorosulfonated polyethylene (CSM), copolymers of CPE and CSM, and mixtures of these. The polyamide resin preferably consists of a member, a mixture of two or more members, or a copolymer of two or more members of a group consisting of nylon 6, nylon 66, nylon 10, nylon 11 and nylon 12. So that a favorable attachment between the short fiber surfaces and the vulcanized rubber, the short fibers are preferably graft bonded to the vulcanized rubber by means of a reactive bonding agent consisting of a member or a mixture of two or more members of a group consisting of a reactive silane compound containing a vinyl, methacryloxi, epoxy, amino or mercaptic group; a reactive titanium compound containing a vinyl, acrylate, amino or long-chain alkyl ester group; the initial condensation polymer of phenol-formaldehyde resin such as the initial condensation polymer of novolac type phenolformaldehyde, the initial condensation polymer of novolac type lactum bisphenol-F-formaldehyde, resorcinol type alkyl-phenol-formaldehyde; and , $\alpha$, $\beta$ - non-saturated carboxylic acid, alicyclic non-saturated carboxylic acid, alkenyl carboxylic acid, and derivatives thereof.

According to a preferred embodiment of the boot having desirable mechanical properties, the vulcanized rubber essentially consists of chlorinated polyethylene (CPE), and the content of the polyamide short fibers is 2 to 40 weight parts for 100 weight parts of the vulcanized rubber. The vulcanized rubber may be vulcanized by a triazine or peroxide vulcanization process. Further, the vulcanized rubber preferably consists of chlorinated polyethylene (CPE) whose degree of chlorination is between 20 and 50%.

BRIEF DESCRIPTION OF THE DRAWINGS

Now the present invention is described in the following with reference to the appended drawings, in which:
Figure 1 is a fragmented sectional view of a boot provided across an automotive drive shaft and a constant velocity joint to which the present invention is applied;
Figure 2 is a schematic sectional view showing an essential part of an injection molding machine for molding the boot to which the present invention is applied;
Figure 3 is a plan view showing the directions of cutting out test pieces of vulcanized sheet prepared for measuring the durability for different short fiber orientations in the boot to which the present invention is applied;
Figure 4 is a graph showing the results of swelling tests conducted on the test pieces; and

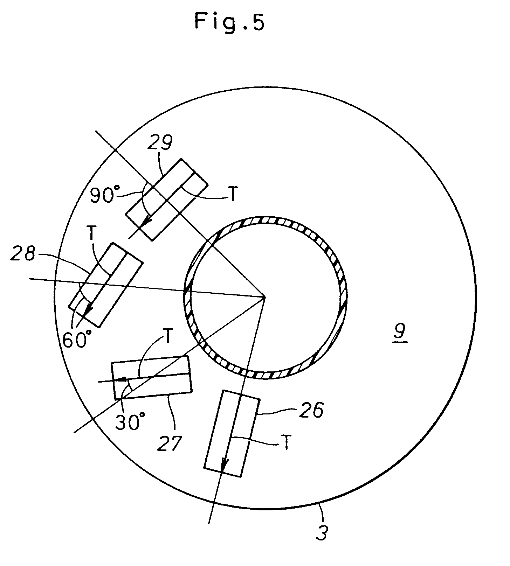

Figure 5 is a plan view showing the directions of cutting out test pieces from a tapered section of the boot to which the present invention is applied.

DETAILED DESCRIPTION OF THE PREFERRED EMBODIMENTS

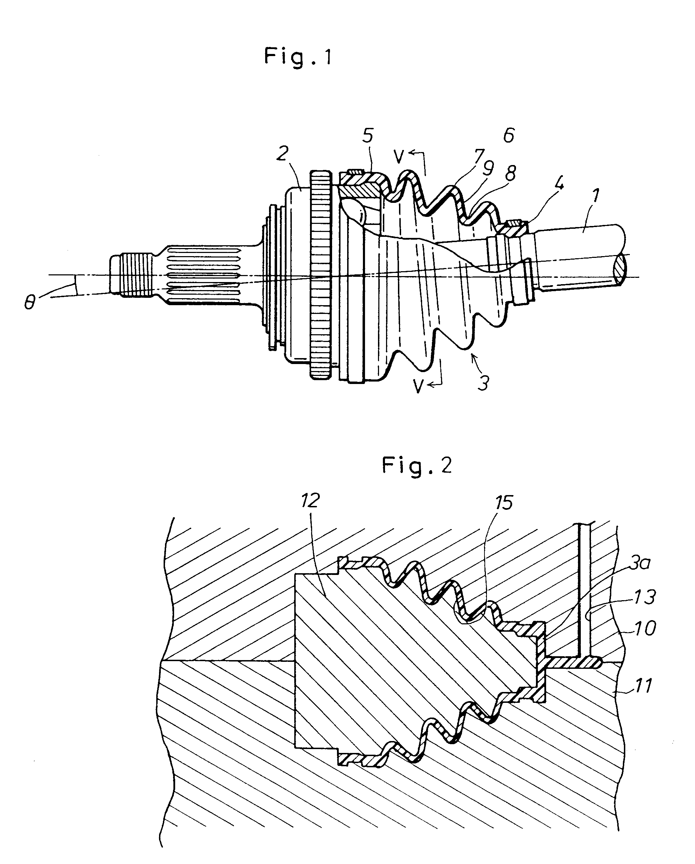

Figure 1 shows a universal joint 2 connected to an end of an automotive drive shaft 1, and a boot 3, having a bellows portion covering the universal joint 3, to which the present invention is applied. The boot 3 is provided with a retaining portion 4 engaged to the drive shaft 1, another retaining portion 5 engaged to the universal joint 2, and a bellows portion 6 situated between these two retaining portions 4 and 5. The bellows portion 6 consists of a plurality of inwardly concave radially outer portions 7, a plurality of inwardly convex radially inner portions 8, and tapered portions 9 each located between each adjoining pair of an inwardly concave radially outer portion 7 and an inwardly convex radially inner portion 8.

Referring to Figure 2, this boot 3 is fabricated by injection molding employing an upper die 10, a lower die 11, a core 12, and an L-shaped gate 13 which communicates with an injection nozzle in the upper die 10 although it is not shown in the drawing, and opens into a cavity 15 facing an end surface 3a of a small diameter end portion of the boot that is to be molded. More specifically, after the dies 10 through 12 are assembled, the composition which is described hereinafter is injected into the cavity 15 from a central point of the small diameter end surface 3a of the boot to be molded at a certain pressure, and the composition is vulcanized. Then, the die assembly is opened, and the boot is removed by expanding the boot 13 away from the core 12 by blowing air into it. Thereafter, the closed end surface 3a end of the boot 3 on the right hand side of Figure 2 is cut apart, and the boot 3 is completed.

The first embodiment of the composition which is to be injected into the cavity 15 consists of the following ingredients. Specifically, Disorac H135 (trade name, manufactured by Daiso Kabushiki Kaisha) serving as chlorinated polyethylene (CPE) or the vulcanizable rubber material, and UBE-FRR #3000 (trade name, manufactured by Ube Kosan Kabushiki Kaisha) in which fine polyamide short fibers are dispersed in chlorinated polyethylene, and the short fibers and the chlorinated polyethylene are graft bonded on the surfaces of the short fibers by way of a reactive bonding agent, SRF carbon black, Sansosizer DOS (trade name, manufactured by Shin-nihon Rika Kabushiki Kaisha) serving as a plastcizing agent, magnesium oxide serving as an antacid agent, and Nocrac 224 (trade name, Oouchi Shinko Kagaku Kabushiki Kaisha) were charged into a Banbury mixer, and mixed for three minutes. The mixture was then cooled by rolls, and OF-100 (trade name, manufactured by Daiso Kabushiki Kaisha) serving as a crosslinking agent and M-181 (trade name, manufactured by Daiso Kabushiki Kaisha) serving as a crosslinking assisting agent were added to the mixture on the rolls, and the mixture which is to be injected into the cavity 15 was obtained. In the left hand side of Table 1 is listed the content of each of the ingredients of the present embodiment by weight %.

Table 1

| Ingredients | embodiments #1 | #2 | #3 | #4 | #5 | Examples for comparison #1 | #2 | #3 |
|---|---|---|---|---|---|---|---|---|
| Disorac H135 | 91 | 95.5 | 77.5 | 47.5 | 91 | 100 | ◄ | – |
| UBE-FRR #3000 | 15 | 7.5 | 37.5 | 87.5 | 15 | – | – | – |
| (Amount of short fibers) | (6) | (3) | (15) | (35) | (6) | – | – | – |
| SRF Carbon black | 55 | ◄ | ◄ | ◄ | 55 | 55 | ◄ | 60 |
| Sansocizer DOS | 40 | ◄ | ◄ | ◄ | 20 | 40 | ◄ | 15 |
| Magnesium oxide | 10 | ◄ | ◄ | ◄ | 10 | 10 | ◄ | 4 |
| Nocrac 224 | 1 | ◄ | ◄ | ◄ | 1 | 1 | ◄ | 2 |
| OF-100 | 2 | ◄ | ◄ | ◄ | – | 2 | ◄ | – |
| M-181 | 3 | ◄ | ◄ | ◄ | – | 3 | ◄ | – |
| Epicoat 828 | | – | – | – | 5 | – | – | – |
| DAP 100 | – | – | – | – | 5 | – | – | – |
| Perkadox 14/40 | – | – | – | – | 5 | – | – | – |
| Neoprene WRT | – | – | – | – | – | – | – | 100 |
| Nylon short fibers | – | – | – | – | – | – | 6 | ◄ |
| Zinc oxide | – | – | – | – | – | – | – | 5 |
| Stearic acid | – | – | – | – | – | – | – | 0.5 |
| Nocrac 810-NA | – | – | – | – | – | | – | 3 |
| Nocceler 22 | – | – | – | – | – | – | – | 0.7 |
| Nocceler TT | – | – | – | | – | – | – | 0.5 |
| **Material properties** | | | | | | | | |
| Viscosity ML$_{1+4}$(100°C) | 55 | 52 | 65 | 83 | 65 | 50 | 53 | 62 |
| Hardness H$_s$ | 64 | 62 | 71 | 86 | 65 | 59 | 64 | 65 |
| Tensile strength TB | 180 | 165 | 190 | 155 | 165 | 160 | 160 | 180 |
| Rupture elongation EB | 240 | 280 | 200 | 110 | 300 | 300 | 280 | 490 |
| Volumetric change (%) (anti-grease property) | 8.0 | 9.0 | 5.5 | 4.0 | 8.5 | 12.5 | 9.5 | 10.0 |
| Anti thermal degradation property (%) | 90 | 80 | 95 | 90 | 95 | 80 | 80 | 28 |
| 100% Modulus(kg/cm$^2$) | 70 | 58 | 100 | 140 | 60 | 48 | 70 | 70 |
| 50% Modulus(kg/cm$^2$) | 39 | 32 | 61 | 79 | 33 | 28 | 45 | 39 |
| Ease of mold release | good | good | good | fair | good | good | good | good |
| Durability against *1) flexing fatigue (hr) | 1260 | 1050 | 1000 | 700 | 1210 | 590 | 550 | 620 |
| Max. expansion *2) by rotation (mm) | 4.0 | 6.1 | 2.7 | 1.0 | 4.9 | 10.5 | 5.5 | 6.0 |

*1) Speed 1,000 rpm, Joint angle 40°, room temp;
*2) Speed 2,000 rpm, Joint angle 10°, 80°C

The middle part of Table 1 shows the properties of the above mentioned composition in terms of the Mooney viscosity measured under the condition of $ML_{2+4}$ and 100 °C. The mixture was placed in a sheet die assembly, and formed into a sheet of 2 mm thickness by vulcanizing it under pressure at 170 °C for ten minutes. It is then cut out in the form of a dumbbell according to the JIS #1 standard and is subjected to a tensile strength test. The results are also given in Table 1 as material properties given in terms of tensile strength, rupture strength, 100% modulus, 50% modulus and hardness. These tests were based on JIS 6300 and JIS 6301. The volumetric change (%) of the molded boot 3 when it was dipped into grease for constant velocity joints at 100 °C for 70 hours, as well as the elongations upon rupture of a dumbbell shaped test piece of this sheet based on the JIS #3 standard before and after the test piece was held at 170 °C in a gear oven for 70 hours is also listed in Table 1 as a measure of the long-term degradation property of the boot. The lower part of Table 1 shows the service lives when the rotational speed of the drive shaft 1 illustrated in Figure 1 was 1,000 rpm with a joint angle of 40 degrees at room temperature, and the maximum expansions (mm) when the rotational speed of the drive shaft 1 illustrated in Figure 1 was 2,000 rpm with a joint angle of 10 degrees at 80 °C.

The chlorinated polyethylene of the present embodiment was prepared by chlorinating polyethylene by the aquatic suspension process with the degree of chlorination in the range of 20 to 50 weight %, and consisted of non-crystalline, minimally crystalline or semi-crystalline chlorinated polyethylene with its residual crystalline component equal to or below 25%.

In practice, the vulcanizable rubber material may also consist of chlorosulfonated polyethylene (CSM) instead of chlorinated polyethylene. These rubber materials do not include any double bonding in their main structures, and are therefore highly resistant against ozone. Further, as they include chlorine and chlorosulfonic groups, they are provided with antigrease and anti-heat properties which make them suitable for use as the rubber material of the boots for joints. The polyamide resin may consist of a member, a mixture of two or more members, or a copolymer of two or more members of a group consisting of nylon 6, nylon 66, nylon 10, nylon 11 and nylon 12. The reactive bonding agent may consist of a member or a mixture of two or more members of a group consisting of a reactive silane compound containing a vinyl, methacryloxi, epoxy, amino or mercaptic group; a reactive titanium compound containing a vinyl, acrylate, amino or long-chain alkyl ester group; the initial condensation polymer of phenol-formaldehyde resin such as the initial condensation polymer of novolac type phenol-formaldehyde, the initial condensation polymer of novolac type lactum bisphenol-F-formaldehyde, resorcinol type alkyl-phenol-formaldehyde; and $\alpha$, $\beta$ - non-saturated carboxylic acid, alicyclic non-saturated carboxylic acid, alkenyl carboxylic acid, and derivatives thereof. However, when the initial condensation polymer of phenol-formaldehyde resin is to be used, it is necessary to combine it with a suitable amount of a compound which forms formaldehyde when heated, such as hexamethylene tetramine, parafolmaldehyde, $\alpha$-polyoxymethylene, and acetoaldehyde ammonia.

Table 1 shows the material properties of several variations of the above mentioned mixture as second through fifth embodiments to the right of those of the first embodiment. The compositions are all given in weight %. Further, the compositions, the contents of the different ingredients, and the material properties of examples 1 through 3 for comparison consisting of boots injection molded by using the same die set as the first through fifth embodiments and dumbbell-shaped test pieces given here as the examples of the prior art are also listed to the right of those for the embodiments 1 through 5. Again, the compositions are all given in weight parts.

The second through fourth embodiments consisted of the combinations of chlorinated polyethylene and polyamide resin fibers with the weight ratio of these components varied from that of the first embodiment. The fifth embodiment is modified from the first embodiment in that the system of vulcanization is changed from the triazine crosslinking system to the peroxide crosslinking system. Meanwhile, the first example for comparison differs from the first embodiment in not using polyamide resin, and the second example for comparison differs from the first embodiment in adding to the mixture polyamide (nylon) which was formed as short fibers in advance and subjected to the normal RFL bonding process. The third example for comparison differs from the first embodiment in using neoprene as an example of chloroprene as the rubber material instead of Disorac H135, changing the contents of SRF carbon black, Sansosizer DOS, magnesium oxide and Nocrac 224, newly introducing zinc oxide, and using Nocceler 22 and Nocceler TT (both trade names, manufactured by Oouchi Shinko Kagaku Kogyo Kabushiki Kaisha) as vulcanization promoting agents instead of using the crosslinking assisting agent with the vulcanization temperature of 160 °C.

The short fibers of polyamide resin employed in the various embodiments are equal to or less than 5 $\mu$m in diameter and 50 $\mu$m or less in length. The polyamide short fibers are required to be contained in 100 weight parts of continuous chlorinated polyethylene by 2 to 40 weight per cent, more preferably by 3 to 20 weight parts. As the content of the short fibers is increased, the rigidity of the boot improves, but, as the content increases beyond 40 weight per cent, the rigidity becomes excessive and not only the elongation upon rupture decreases but also the tensile rupture strength diminishes with the added disadvantage of increased difficulty in removing the molded boot from the die assembly. On the other hand, when the content of the short fibers is reduced below 2%, the rigidity becomes unacceptably low, and the advantage of containing short fibers is lost. Further, as the diameter of the short fibers exceeds 5 $\mu$m, concentration of stress tends to occur in the high strain region.

In the above embodiments, chlorinated polyethylene and polyamide resin were strongly attached to each other by graft bonding, and this contributes to the substantial improvement in the resistance to fatigue as compared to the normal bonding process (for instance, RFL process: second example for comparison). To ensure a sufficient resistance to fatigue, the ratio of graft bonding between chlorinated polyethylene and polyamide resin needs to be equal to or greater than 10 weight %. When the ratio of graft bonding is less than 10 weight %, its resistance to fatigue drops to the same level as that of elastomer material containing short fibers subjected to normal bonding process.

The boot of each of the embodiments can be obtained by mixing and kneading 40 to 97 weight parts of chlorinated polyethylene and 100 to 5 weight parts of UBE-FRR #3000 in a normal kneading machine for rubber and plastic materials. It is obvious that stabilizers, anti-aging agents, plasticizers, reinforcing agents, fillers, workability improving agents, coloring agents, and crosslinking agents may be added thereto as required. The crosslinking agents may preferably be those based on triazine bridge bonding and peroxide bridge bonding, but may also be others.

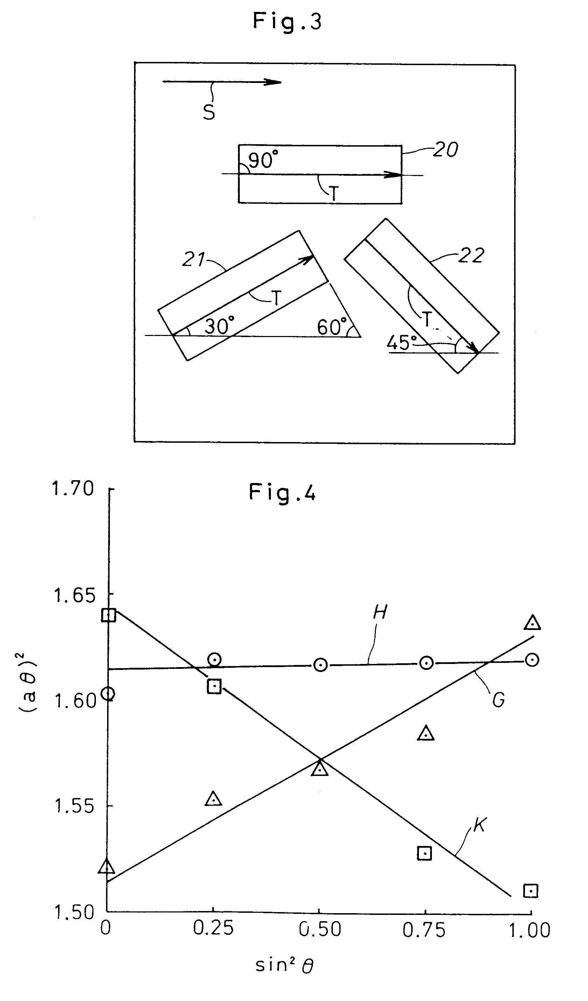

Figure 3 shows a sheet material made by molding the composition of the first embodiment. The arrows S show the orientation of the fibers in this molded sheet. According to the test conducted on a rectangular test piece 20 cut out with its axis of measurement T forming a zero degree angle ($\sin^2\theta = 0$) with the axis of fiber orientation S, an identically dimensioned test piece 21 cut out with its axis of measurement T forming a 30 degree angle ($\sin^2\theta = 0.25$) with the axis of fiber orientation S, and another identically dimensioned test piece 22 cut out with its axis of measurement T forming a 45 degree angle ($\sin^2\theta = 0.50$) with the axis of fiber orientation S, by letting them swell in toluene at 23 °C for 70 hours, it was found that the test piece 20 demonstrated a least change in the length as shown by the solid line G in the graph of Figure 4. Here, $\sin\theta$ indicates the angle of the axis of measurement with respect to the axis of fiber orientation, and a$\theta$ denotes the following:

a$\theta$ = (length of the test piece after swelling) / (length of the test piece before swelling)

This means that the test piece 20 demonstrated a least change in the length along the direction of fiber orientation. By changing the direction of measurement on the test piece 20, it is possible to obtain the result of a test in which the direction of measurement forms a 90 degree angle with respect to the axis of fiber orientation S. Likewise, by changing the direction of measurement on the test piece 21, it is possible to obtain the result of a test in which the direction of measurement forms a 60 degree angle with respect to the axis of fiber orientation S. Figure 4 also shows such results.

The solid line H indicates the result of a test conducted on a sheet material molded from the same mixture as that of the first example for comparison not containing short fibers. a$\theta$ for the test pieces in the form of sheet for the first example for comparison were substantially constant irrespective of the angle of cutting out the test pieces. The only difference between the first embodiment and the first example for comparison is the orientation of the short fibers, and it is possible to determine that direction of fiber orientation in a molded article by this method of measurement.

According to the test conducted on a rectangular test piece 26 cut out from the tapered part 9 of the boot in Figure 1 molded from the mixture of the first embodiment with its axis of measurement T extending in parallel with a radial direction of the boot, and test pieces 27 through 29 cut out with its axis of measurement T forming 30, 60 and 90 degree angles, respectively, the test piece 29 with its axis of measurement perpendicular (90 degrees) to the radial direction demonstrated the least change in length, and the test piece 26 with its axis of measurement in parallel (zero degree) with the radial direction demonstrated the largest change in the length.

According to the actual method of molding a boot for a joint, the material may be injected into a cavity from the axial end surface of the small diameter end of a metallic die set having the shape corresponding to the boot as shown in Figure 2 or, alternatively, from the axial end surface of the large diameter end of the metallic die set. In the latter case, since the longitudinal flow of the rubber in the metallic die set is not uniform, the short fibers would not be oriented uniformly. This is because it is common to inject the material from a peripheral part of the end surface from the view point of the flow property of the rubber material and the economy of the material when the injection is to be carried out from the large diameter end, instead of injecting from a central part of the end surface as is the case with the present embodiment.

According to the present invention, since the short fibers of polyamide resin in the bellows portion of a boot are oriented circumferentially, it is possible to favorably reinforce the boot against the circumferential (or tangential) force resulting from the rotation of the boot. Therefore, the expansion of the boot during high speed rotation can be favorably controlled, and the durability of the boot can be improved. Further, by injection molding the composition consisting of vulcanizable rubber material having short fibers of polyamide resin distributed therein with the short fibers forming graft bonding with the rubber material on their surfaces into the cavity of a die set having the shape corresponding to that of the boot from an axial end surface of the boot to be molded, the polyamide short fibers can be readily oriented circumferentially in the bellows portion of the boot so that the manufacturing efficiency would not be impaired as compared to the conventional boot. Thus, the present invention offers a significant advantage.

Although the present invention has been described in terms of preferred embodiments thereof, it is obvious to a person skilled in the art that various alterations and modifications are possible without departing from the scope of the present invention which is set forth in the appended claims.

## Claims

1. A boot for a universal joint comprising a substantially tubular bellows portion and a cylindrical retaining portion provided at each axial end of said bellows portion, said bellows portion being made of a material comprising vulcanized rubber, and short fibers made of polyamide resin distributed in said vulcanized rubber, said short fibers being graft bonded to said vulcanized rubber and substantially oriented along a circumferential direction of said bellows portion.

2. A boot for a universal joint according to claim 1, wherein said vulcanized rubber essentially consists of chlorinated polyethylene (CPE) and/or chlorosulfonated polyethylene (CSM).

3. A boot for a universal joint according to claim 2, wherein said polyamide resin consists of a member, a mixture of two or more members, or a copolymer of two or more members of a group consisting of nylon 6, nylon 66, nylon 10, nylon 11 and nylon 12.

4. A boot for a universal joint according to claim 3, wherein said short fibers are graft bonded to said vulcanized rubber by means of a reactive bonding agent consisting of a member or a mixture of two or more members of a group consisting of a reactive silane compound containing a vinyl, methacryloxi, epoxy, amino or mercaptic group; a reactive titanium compound containing a vinyl, acrylate, amino or long-chain alkyl ester group; the initial condensation polymer of phenol-formaldehyde resin such as the initial condensation polymer of novolac type phenol-formaldehyde, the initial condensation polymer of novolac type lactum bisphenol-F-formaldehyde, resorcinol type alkyl-phenol-formaldehyde; and $\alpha$, $\beta$ - non-saturated carboxylic acid, alicyclic nonsaturated carboxylic acid, alkenyl carboxylic acid, and derivatives thereof.

5. A boot for a universal joint according to claim 4, wherein the diameter of said fibers is approximately less than 5 $\mu$m and the length of said fibers is approximately larger than 50 $\mu$m.

6. A boot for a universal joint according to claim 5, wherein the content of said polyamide short fibers is 2 to 40 weight parts for 100 weight parts of said vulcanized rubber.

7. A boot for a universal joint according to claim 2, wherein said vulcanized rubber consists of chlorinated polyethylene (CPE) whose degree of chlorination is between 20 and 50%.

8. A method for fabricating a boot as set forth in any one of the preceding claims, comprising the steps of:
   mixing and kneading a mixture comprising vulcanizable rubber, and polyamide resin distributed in said vulcanizable rubber as short fibers which are graft bonded to said vulcanizable rubber; and
   injection molding said mixture by injecting said mixture into a metallic die set having a cavity corresponding to the shape of said boot from a substantially central part of an axial end portion of said die set, and vulcanizing said mixture in said metallic die set.

9. A method according to claim 8, wherein said boot has two axial end faces having different diameters, said die set having a gate for introducing said mixture which is located in a position corresponding to a substantially central part of one of said end faces having a smaller diameter.

10. A composition for molding a boot for a universal joint, comprising:
    vulcanizable rubber, and
    polyamide resin distributed in said vulcanizable rubber as short fibers which are graft bonded to said vulcanizable rubber.

Fig.1

Fig.2

## Fig.3

## Fig.4

Fig.5